# EUROPÄISCHE PATENTANMELDUNG

(11) **EP 4 744 492 A1**
(43) Veröffentlichungstag der Anmeldung: **20.05.2026**
(21) Anmeldenummer: 24212680.3
(22) Anmeldetag: 13.11.2024
(51) Int. Cl.: A22C 7/00

(54) **VORRICHTUNG ZUM ERZEUGEN EINES BALLFÖRMIGEN LEBENSMITTELPRODUKTS**

(71) Anmelder: Albert Handtmann Maschinenfabrik GmbH & Co. KG, 88400 Biberach (DE)
(72) Erfinder: Marrink, Mark Christian, 1251 LK Laren (NL); Deetman, Jan Coenraad, 8081 AT Elburg (NL)
(74) Vertreter: Grünecker Patent- und Rechtsanwälte PartG mbB

(57) **Zusammenfassung**

Die Erfindung betrifft eine Vorrichtung und ein Verfahren zum Erzeugen eines ballförmigen Lebensmittelprodukts, insbesondere eines Burger Patties mit einem Förderband zum Fördern eines Lebensmittelstrangs, insbesondere Hackfleischstrangs in Transportrichtung und mit einer Formeinrichtung zum Formen des ballförmigen Lebensmittelprodukts, die gegenüberliegende Formteile aufweist, die auf dem Förderband quer zur Transportrichtung aufeinanderzu in eine Formposition und auseinander bewegbar sind. Die Formeinrichtung umfasst weiter einen auf und ab bewegbaren Stempel, der in einer Formposition zwischen die Formteile bewegbar ist. Die Unterseite des Stempels und die zur Förderbandmitte gerichteten Seiten der Formteile weisen jeweils nach innen gerichtete gewölbte Aussparungen auf.

## Beschreibung

Die Erfindung betrifft eine Vorrichtung und ein Verfahren zum Erzeugen eines ballförmigen Lebensmittelprodukts, insbesondere eines Burger Patties sowie eine Füllmaschine mit einer entsprechenden Vorrichtung.

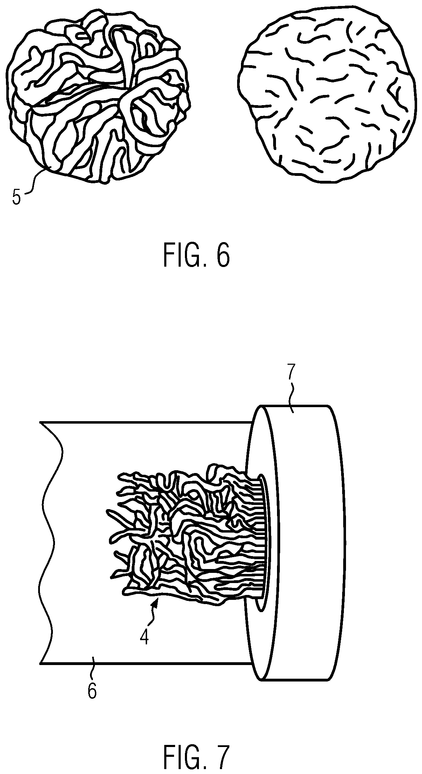

Ball- bzw. im wesentlichen kugelförmige Lebensmittelprodukte aus unterschiedlichen Lebensmitteln sind aus dem Stand der Technik wohl bekannt. Insbesondere für sogenannte "Smashed-Burger" werden Hackfleischbällchen hergestellt, die dann auf den Grill gelegt und flachgedrückt werden. Die Figur 6 zeigt links ein ballförmiges Burger Patty aus Hackfleisch, das von einem Fleischwolf erzeugt wurde und bei dem die Struktur der einzelnen Stränge aufrechterhalten ist, und rechts ein ballförmiges Burger Patty, das aus einem Fleischteig gebildet wurde.

Im Stand der Technik gibt es viele verschiedene Möglichkeiten Lebensmittelbällchen bzw. Fleischbällchen zu erzeugen. Die bekannten Vorrichtungen sind kompliziert und weisen in Zusammenhang mit Burger Patties alle den Nachteil auf, dass die ballförmigen Burger Patties nicht mehr die im Fleischwolf erzeugten Einzelstränge aufweisen, was zu einem anderen Erscheinungsbild führt.

Bislang werden die ballförmigen Burger Patties deshalb hauptsächlich von Hand geformt. Dabei muss das vom Fleischwolf erzeugte Hackfleisch vorsichtig zu einem Ball geformt werden, damit die Struktur der Einzelstränge, wie beispielsweise in Figur 7 gezeigt ist, nicht zerstört wird. Dann kann das ballförmige Burger Patty auf den Grill gelegt und flach zusammengedrückt werden und behält seine ansprechende ursprüngliche Form.

Ballförmige Lebensmittelprodukte sind aber nicht nur für Hackfleisch von Interesse, sondern auch für diverse Veggie-Produkte, etc.

Hiervon ausgehend liegt der vorliegenden Erfindung die Aufgabe zugrunde, eine verbesserte Vorrichtung zum Erzeugen eines im Wesentlichen ballförmigen Lebensmittelprodukts und ein entsprechendes Verfahren bereitzustellen, die auf einfache Art und Weise ballförmige Lebensmittelprodukte, insbesondere ballförmige Burger Patties herstellen können.

Erfindungsgemäß wird diese Aufgabe durch die Merkmale der Ansprüche 1 und 12 gelöst.

Unter ballförmigen Lebensmittelprodukten versteht man einen Ball aus dem Lebensmittelprodukt, der nicht zwangsläufig ideal kugelförmig sein muss, aber dessen Höhe z.B. nicht mehr als 30 % von seinem maximalen Durchmesser abweicht und der wenn er auf einer Unterlage aufliegt eine abgerundete freie Außenkontur hat. Die Vorrichtung weist ein Förderband auf zum Fördern eines Lebensmittelstrangs, insbesondere eines Hackfleischstrangs, der zum Beispiel von einem Fleischwolf auf das Förderband produziert wird. Das Förderband fördert den Lebensmittelstrang in Transportrichtung T.

Weiter weist die Vorrichtung eine Formeinrichtung auf, zum Formen des ballförmigen Lebensmittelprodukts, während es sich auf dem Förderband befindet. Die Formeinrichtung weist in Bezug auf den Lebensmittelstrang gegenüberliegende Formteile auf, die auf dem Förderband aufeinanderzu in eine Formposition und wieder auseinander bewegbar sind. Das bedeutet, dass die Formteile zum Beispiel quer, insbesondere senkrecht zur Transportrichtung T beweglich ausgebildet sind. Weiter weist die Formeinrichtung einen auf- und ab bewegbaren Stempel auf, der in einer Formposition zwischen die Formteile bewegbar ist, so dass in der Formposition der Lebensmittelstrang durch die Formteile und den Stempel zusammengepresst und geformt wird.

Damit ballförmige Lebensmittelprodukte geformt werden können, weisen die Unterseite des Stempels und die zur Förderbandmitte gerichteten Seiten der Formteile jeweils nach innen gerichtete gewölbte Aussparungen auf. Durch die Wölbungen kann die abgerundete Außenkontur erzeugt werden. Die Aussparung im Stempel ist dergestalt, dass eine abgerundete obere Kuppe des ballförmigen Lebensmittelprodukts erzeugt werden kann.

Das bedeutet, dass die Formeinrichtung das Lebensmittelprodukt durch die Formteile, den Stempel und das Förderband, auf dem die Formteile angeordnet sind, formt. Zwar ist das Förderband gerade und nicht abgerundet, was aber nicht stört, da das ballförmige Lebensmittelprodukt später mit seiner unteren Fläche aufliegt, z.B. in einer Verpackung, einem Grill oder einem Topf oder einer Pfanne etc. und das Produkt dann trotzdem perfekt ball bzw. kugelförmig aussieht.

Die Vorrichtung kann somit auf einfache Art und Weise die entsprechenden Lebensmittelbälle formen, wobei insbesondere bei Hackfleisch die ursprüngliche vom Fleischwolf erzeugte Struktur, das heißt, die vom Fleischwolf ausgestoßenen Stränge, ihre Form behalten können.

Es ist vorteilhaft, wenn die gewölbten Aussparungen des Stempels und der Formteile in der Formposition derart aneinandergrenzen, dass auf dem Förderband ein geschlossener Formraum entsteht, der eine zum ballförmigen Lebensmittelprodukt komplementäre Form aufweist.

Vorteilhafterweise ist die Aussparung im jeweiligen Formteil derart ausgebildet, dass im Querschnitt betrachtet die Innenwand des jeweiligen Formteils gekrümmt, insbesondere teilkreisförmig oder halbkreisförmig ausgebildet ist. So kann das jeweilige Formteil jeweils eine seitliche Hälfte des Lebensmittels umschließen. In dieser Anmeldung werden unter Querschnitt Querschnitts - Schnittebenen parallel zum Förderband verstanden.

Vorteilhafterweise nimmt die Querschnittsfläche der jeweiligen Aussparung zumindest in einem unteren Bereich, insbesondere einer unteren Hälfte des jeweiligen Formteils zumindest abschnittsweise nach unten hin ab. Das bedeutet, dass auch das Lebensmittelprodukt im mittleren Bereich einen größeren Durchmesser aufweist als im unteren Bereich, so dass eine Ball- bzw. Kugelform erzeugt werden kann. Zumindest abschnittsweise bedeutet, dass die Querschnittsfläche nicht kontinuierlich oder stetig abnehmen muss sondern auch stufenweise.

Vorteilhafterweise ist zumindest in einem unteren Bereich, insbesondere der unteren Hälfte desjeweiligen Formteils die Innenfläche im Querschnitt betrachtet, gekrümmt und gleichzeitig im Längsschnitt quer zur Transportrichtung (T) betrachtet gekrümmt.

Es ist vorteilhaft, wenn im Querschnitt betrachtet, die Aussparung des Stempels im Wesentlichen kreisförmig ist, d.h. eine kreisförmige Außenkontur aufweist. Somit kann die Kuppe des ballförmigen Lebensmittels erzeugt werden. Dabei ist besonders vorteilhaft, wenn die Aussparung derart gewölbt ist, dass die Querschnittsfläche der Aussparung im Stempel zur Unterseite des Stempels hin zunimmt.

Es ist vorteilhaft, wenn die Formteile in der Formposition derart angeordnet sind, dass sich gegenüberliegende Seitenbereiche der Formteile berühren. Das heißt, dass jedes Formteil in Transportrichtung betrachtet, eine vordere Seitenbereich und eine hintere Seitenbereich aufweist, zwischen denen die Aussparung angeordnet ist. Wenn sich die gegenüberliegenden Seitenbereiche der gegenüberliegenden Formteile berühren, kann der Formraum geschlossen werden und neben dem Formen kann gleichzeitig ein Abteilen bzw. Abtrennen des ballförmigen Lebensmittelprodukts vom Lebensmittelstrang erfolgen.

Gemäß einer weiteren Ausführungsform weisen die gegenüberliegenden Formteile jeweilige Schneidkanten auf, deren Schneidflächen sich, wenn die Formteile in der Formposition angeordnet sind, überlappen. Das heißt, dass jedes Formteil in Transportrichtung betrachtet, eine vordere Schneidkante und eine hintere Schneidkante aufweist, zwischen denen die Aussparung angeordnet ist. Wenn sich die gegenüberliegenden Schneidflächen der gegenüberliegenden Formteile überlappend berühren, kann der Formraum geschlossen werden und neben dem Formen kann gleichzeitig ein verbessertes Abschneiden des ballförmigen Lebensmittelprodukts vom Lebensmittelstrang erfolgen.

Es ist vorteilhaft, wenn der Abstand der Innenflächen der gegenüberliegenden Formteile in einer Richtung quer zur Transportrichtung und in Transportrichtung betrachtet, in der unteren Hälfte nach unten hin abnimmt und vorzugsweise in einem oberen Bereich der Formteile, insbesondere in einer oberen Hälfte der Formteile im Wesentlichen konstant ist. Somit kann im unteren Bereich, insbesondere in der unteren Hälfte, eine abgerundete Außenkontur erzeugt werden, während im oberen Bereich die abgerundete Form des ballförmigen Lebensmittelprodukts über den Stempel erzeugt werden kann. Wenn im oberen Bereich der Abstand der Seitenflächen der gegenüberliegenden Formteile konstant ist, kann der obere Bereich der Formteile als Führung für den Stempel genutzt werden.

Das heißt, dass vorteilhafterweise der Stempel im oberen Bereich der Formteile über die Innenflächen der Formteile geführt werden kann, wobei vorzugsweise die Außenkontur des Stempels im Wesentlichen komplementär zur Innenkontur der gegenüberliegenden Formteile ausgebildet ist, wenn diese sich in der Formposition befinden. Dabei wird der Stempel vorzugsweise maximal bis zur halben Höhe der Formteile eingeführt.

Bei dem erfindungsgemäßen Verfahren zum Erzeugen eines ballförmigen Lebensmittelprodukts mit einer Vorrichtung nach mindestens einem der Ansprüche 1 bis 10 wird ein Lebensmittelstrang erzeugt und auf das Förderband aufgebracht. Der Lebensmittelstrang wird auf dem Transportband zwischen die voneinander beabstandeten Formteile transportiert. Dann wird die Formeinrichtung geschlossen. Dies erfolgt durch Aufeinanderzubewegen der Formteile in die Formposition, wodurch das Lebensmittel verdrängt wird. Durch Bewegen des Stempels von oben auf den Lebensmittelstrang wird das Lebensmittel durch die Formteile, den Stempel und das Förderband in eine ballförmige Form gepresst. Anschließend wird die Formeinrichtung geöffnet und das ballförmige Lebensmittelprodukt kann zum Beispiel weiter gefördert oder vom Förderband genommen und z.B. verpackt werden.

Vorteilhafterweise wird die Formeinrichtung vor dem Öffnen eine bestimmte Zeit lang, insbesondere 300ms bis 1000ms in der Formposition gehalten. So können sich die einzelnen Komponenten des Lebensmittels aneinanderlegen und aneinanderhaften, beispielsweise die Einzelstränge des Hackfleisches, so dass das ballförmige Lebensmittelprodukt im Anschluss formstabil ist.

Vorteilhafterweise ist das Lebensmittelprodukt Hackfleisch, wobei über einen Fleischwolf Hackfleisch, das vorzugsweise aus einer Vielzahl von Einzelsträngen gebildet ist, auf das Förderband produziert wird. Über die Formeinrichtung werden ballförmige Burger Patties erzeugt, die dann vom Konsumenten z.B. auf den Grill gelegt und flachgedrückt werden können.

Die Erfindung betrifft auch eine Füllmaschine mit einer Vorrichtung nach mindestens einem der Ansprüche 1 bis 10 mit einem Förderwerk, das über eine Auslasseinrichtung, z.B. ein Auslassrohr das Lebensmittel auf das Förderband produziert. Somit kann in einer Linie das ballförmige Lebensmittelprodukt produziert werden. Vorteilhafterweise weist die Auslasseinrichtung einen Fleischwolf auf zum Erzeugen des Hackfleisches direkt auf das Förderband.

Die vorliegende Erfindung wird nachfolgend unter Bezugnahme folgender Figuren näher erläutert.
- Figur 1: zeigt grob schematisch eine Ausführungsform einer Füllmaschine gemäß der vorliegenden Erfindung.
- Figur 2: zeigt schematisch in perspektivischer Darstellung eine Formeinrichtung sowie erzeugte ballförmige Burger Patties in einer Schale.
- Figur 3: zeigt schematisch einen Längsschnitt quer zur Transportrichtung Ausführungsform einer Formeinrichtung gemäß der vorliegenden Erfindung.
- Figur 4A: zeigt einen Längsschnitt durch die Mittelachse M des in Figur 3 gezeigten Ausführungsbeispiels in Transportrichtung mit geöffnetem Stempel.
- Figur 4B: zeigt einen Längsschnitt der in Figur 3 gezeigten Ausführungsform in Transportrichtung T durch die Mittelachse M entlang der Linie I-I.
- Figur 4C: zeigt einen Querschnitt entlang der Linie II -II in Figur 3.
- Figur 4D: zeigt einen Querschnitt entlang der Linie III - III in Figur 3.
- Figur 4E: zeigt einen Querschnitt entlang der Linie IV - IV in der Figur 3.
- Figur 4 F: zeigt eine Unteransicht vom Boden in Figur 3
- Figur 5: zeigt den Verfahrensablauf gemäß einem Ausführungsbeispiel der vorliegenden Erfindung.
- Figur 6: zeigt zwei unterschiedlich geformte ballförmige Burger Patties.
- Figur 7: zeigt grob schematisch einen Fleischwolf sowie über den Fleischwolf erzeugtes Hackfleisch, das aus einer Vielzahl von Einzelsträngen gebildet ist.
- Figur 8: zeigt einen Querschnitt der Schneidkanten der Formteile in der Formposition gemäß einem bevorzugten Ausführungsbeispiel.

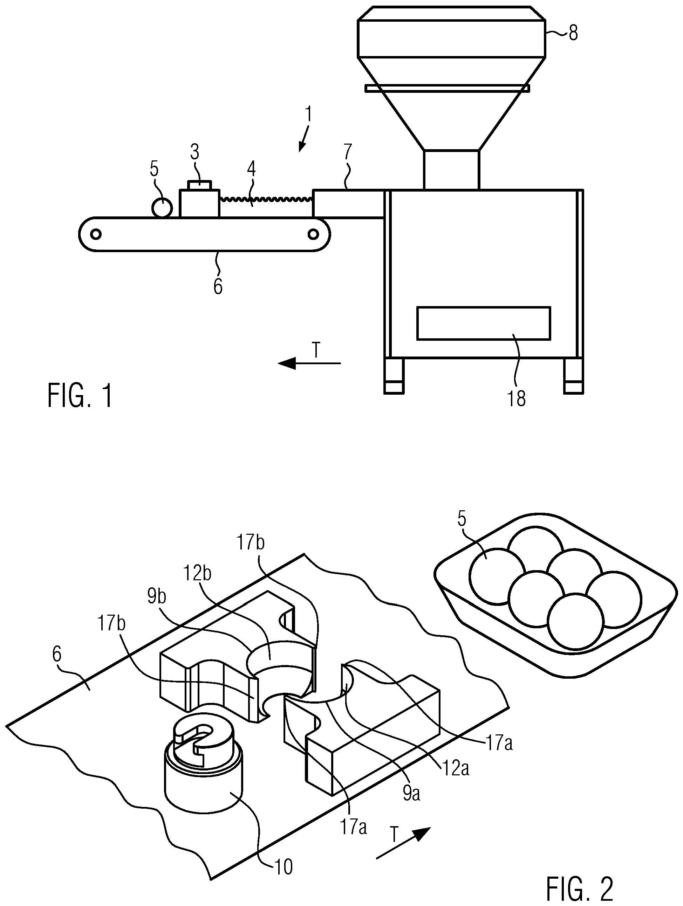

Figur 1 zeigt eine Ausführungsform einer Füllmaschine 2 mit einer erfindungsgemäßen Vorrichtung 1 zum Erzeugen eines ballförmigen Lebensmittelprodukts 5 aus einem Lebensmittelstrang 4.

Die Füllmaschine weist bekannterweise einen Trichter 8 auf, sowie ein nicht gezeigtes Förderwerk, wie beispielsweise eine Flügelzellenpumpe, über das das Lebensmittel, zum Beispiel Fleisch oder Veggie-Masse, zu einer Auslasseinrichtung, zum Beispiel einem Füllrohr, als Lebensmittelstrang 4 auf ein Transportband 6 produziert wird und in Transportrichtung T gefördert werden kann. Vorteilhafterweise umfasst beispielsweise die Auslasseinrichtung einen Fleischwolf 7, über den, wie insbesondere in Figur 7 dargestellt ist, Hackfleisch erzeugt werden kann, insbesondere in Form einer Vielzahl von Einzelsträngen.

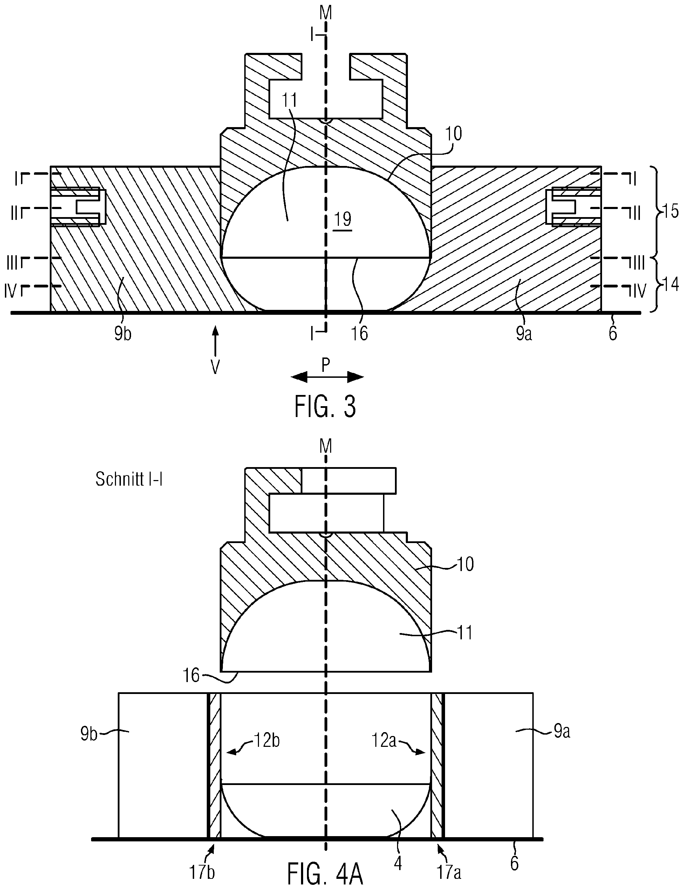

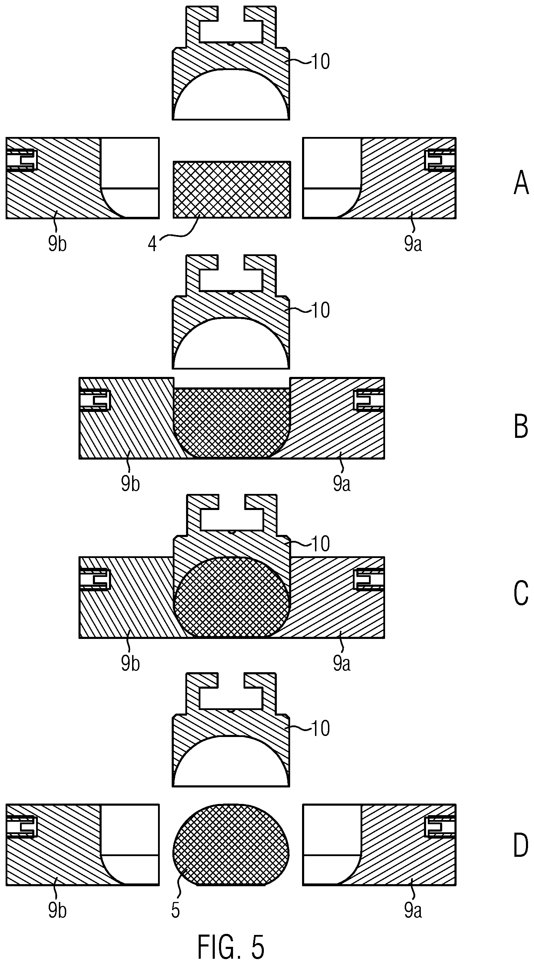

Die Vorrichtung 1 zum Erzeugen des ballförmigen Lebensmittelprodukts 5, zum Beispiel im Fall von Hackfleisch eines Burger Patties 5 weist, wie insbesondere aus den Figuren 2 bis 4E hervorgeht, gegenüberliegende Formteile 9a, 9b auf. Diese Formteile sind derart angeordnet, dass sie auf dem Förderband 6 quer zur Transportrichtung T aufeinander zu in eine Formposition F bewegt werden können und auch wieder auseinander bewegt werden können. Die Formteile 9a, 9b sind dabei seitlich des Lebensmittelstrangs 4 angeordnet und können bei ihrer Bewegung in die Formposition F in den Lebensmittelstrang 4 eingreifen. Die Formeinrichtung 3 weist auch einen Stempel 10 auf, der in einer Formposition F zwischen die Formteile 9a, 9b bewegt werden kann, so dass in der Formposition F der Lebensmittelstrang 4 durch die Formteile 9a, 9b, den Stempel 10 und das Förderband 6 geformt werden kann, wie insbesondere auch aus der Figur 3 sowie aus der Figur 5, die nachfolgend noch näher beschrieben wird, hervorgeht.

Erfindungsgemäß weist die Unterseite 16 des Stempels 10 eine nach innen, das heißt in den Stempel hinein gerichtete, gewölbte Aussparung 11 auf. Die Aussparung ist dergestalt, dass eine abgerundete obere Kuppe des ballförmigen Lebensmittelprodukts erzeugt werden kann. Fig. 3 zeigt schematisch einen Längsschnitt quer zur Transportrichtung T einer erfindungsgemäße Ausführungsform einer Formeinrichtung mit geschlossenem Stempel. Fig. 4A zeigt einen Längsschnitt durch die Mittelachse M des in Figur 3 gezeigten Ausführungsbeispiels in Transportrichtung T mit geöffnetem Stempel 10. Die Mittelachse M befindet sich in der Mitte der Formeinrichtung 3 und steht senkrecht auf dem Förderband.

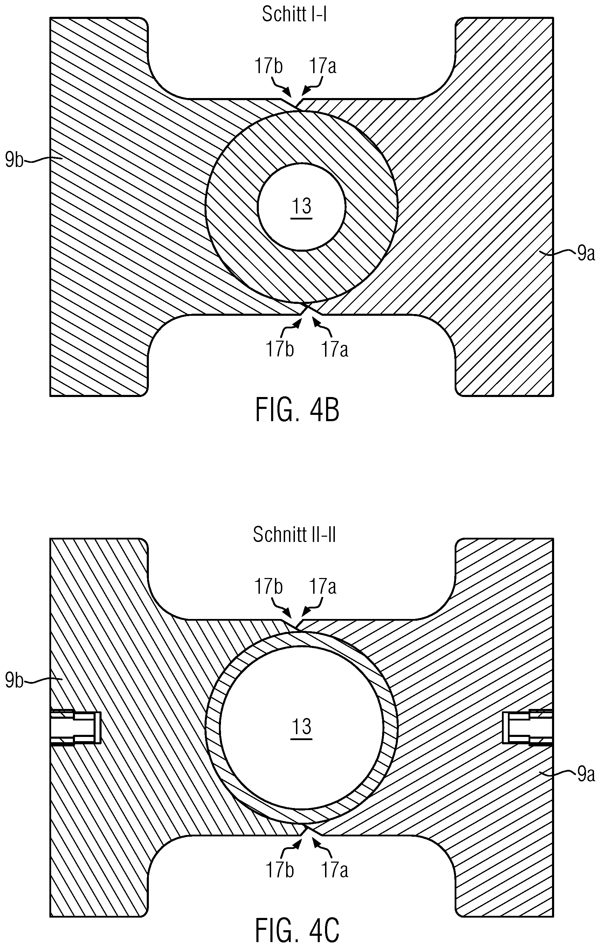

Fig. 4B C zeigt einen Querschnitt entlang der Linie I-I in Fig.3 .Wie der Querschnitt, hier in einer Ebene parallel zum Förderband zeigt, weist die Aussparung 11 im Stempel 10 eine im Wesentlichen kreisförmige Form auf.

Figur 4C zeigt einen Schnitt entlang der Linie II-II , also unterhalb der Schnittlinie I-I in Figur 3 . Die Aussparung 11 weist einen größeren Durchmesser als in Fig. 4 B auf.

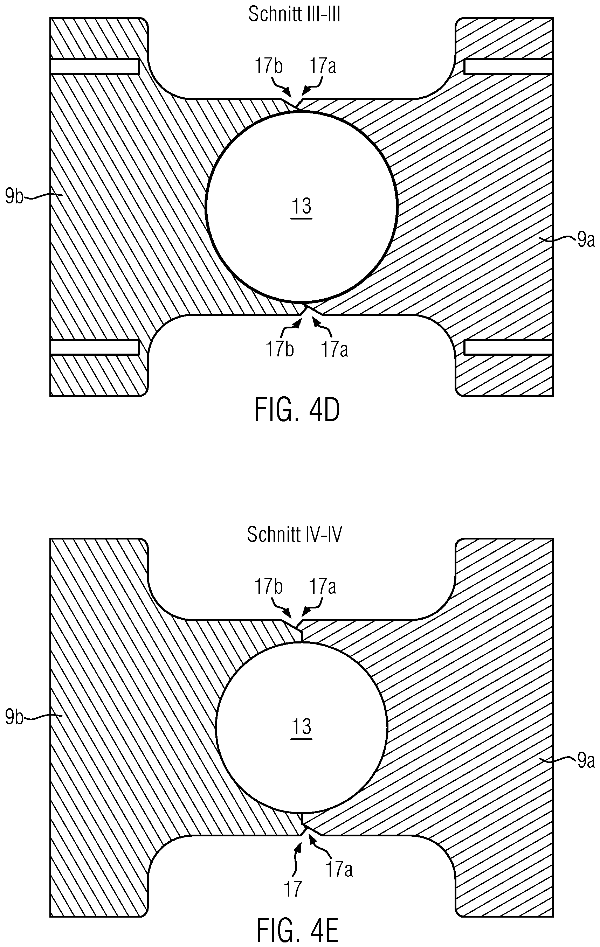

Figur 4D zeigt einen Querschnitt entlang der Linie III-III in Figur 3, das heißt unterhalb der Schnittlinie I-I und II-II.. In diesem Bereich weist die Querschnittsfläche der Aussparung 11 im Stempel 10 einen größeren Querschnitt auf. Das heißt, dass die Querschnittsfläche der Aussparung im Stempel zur Unterseite 16 hin zunimmt. Die Form der Aussparung ist auch in Fig. 4A zu erkennen. Vorzugsweise ist die Aussparung rotationssymmetrische zur Mittelachse M.

Der Stempel 10 ist über ein nicht dargestelltes Stellglied, beispielsweise einen Motor, auf und ab bewegbar. Auch die beiden gegenüberliegenden Formteile 9a, 9b sind über ein entsprechendes Stellglied, wie durch den Pfeil P in Figur 3 dargestellt ist, hin und her bewegbar.

Ebenso wie der Stempel 10, weisen auch die Formteile 9a, 9b jeweils nach innen gerichtete gewölbte Aussparungen 12a, 12b auf, um dem Lebensmittelprodukt die abgerundete Form zu geben.

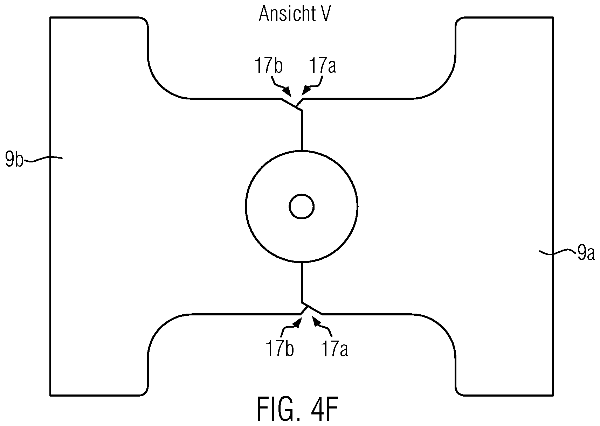

Wie der Figur 4A und der Figuren 4E und 4F, die ein Querschnitt entlang der Linie IV-IV und eine Unteransicht V in Figur 3 zeigen, sind die entsprechenden Aussparungen 12a und 12b im jeweiligen Formteil 9a, 9b derart ausgebildet, dass im Querschnitt betrachtet, die Innenwand des jeweiligen Formteils gekrümmt, insbesondere teilkreisförmig oder halbkreisförmig ist. Die Aussparung ist z.B. jeweils dergestalt, dass das jeweilige Formteil eine seitliche Hälfte des Lebensmittels umschließen kann. Die Innenwand der Formteile 9a, 9b ist jedoch nicht nur in dieser Ebene gekrümmt, sondern auch, wie aus den Figuren 3, 4A hervorgeht, auch im unteren Teil 14, das heißt, zum Beispiel der unteren Hälfte des jeweiligen Formteils gekrümmt, um die ballförmige Form erzeugen zu können. Dabei verläuft diese Krümmung derart, dass die Querschnittsfläche der Aussparung 12a, 12b zumindest in einem unteren Bereich 14, insbesondere einer unteren Hälfte des jeweiligen Formteils, zumindest abschnittweise nach unten abnimmt, das heißt sich verjüngt.

Gegenüberliegenden Seitenbereiche 17a, 17b der Formteile 9a, 9b, berühren sich, wenn die Formteile in der Formposition F angeordnet sind, das heißt die entsprechenden gegenüberliegenden Seitenbereiche der gegenüberliegenden Formteile werden auf Anschlag gefahren um die Form seitlich zu schließen. Wie nachfolgend noch näher erläutert und in den Figuren dargestellt weisen die Formteile in diesem Ausführungsbeispiel z.B. Schneidkanten 17a,17b mit entsprechenden Schneidflächen 20a, 20b auf.

Wie insbesondere der Figur 3 und den Figuren 4 zu entnehmen ist, ist der Abstand der Innenflächen der gegenüberliegenden Formteile in einer Richtung quer zur Transportrichtung derart, dass er nach unten hin abnimmt um die gewölbte Form zu erzeugen. In einer oberen Hälfte 15 kann der Abstand der Innenflächen im Wesentlichen konstant sein. So kann der Stempel 10, dessen Außenkontur im Wesentlichen komplementär zur Innenkontur der gegenüberliegenden geschlossenen Formteile im oberen Bereich 15 ausgebildet ist, durch die Formteile 9a, 9b in die korrekte Position geführt werden. Die gewölbten Aussparungen 11, 12a, 12b des Stempels 10 und der Formteile 9a, 9b grenzen, wie insbesondere aus Figur 3 hervorgeht, in der Formposition F derart aneinander, dass auf dem Förderband 6 ein geschlossener ballförmiger Formraum 13 entsteht, der vorzugsweise rotationssymmetrisch zur Mittelachse M ausgebildet ist. Das bedeutet, dass die Formeinrichtung 3 das Lebensmittelprodukt 5 durch die Formteile 9a, 9b, den Stempel 10 und das Förderband 6 formen kann. Zwar ist das Förderband gerade und nicht abgerundet, was aber nicht stört, da das erzeugte ballförmige Lebensmittelprodukt später mit seiner unteren Fläche aufliegt, z.B. in einer Verpackung, einem Grill oder einem Topf oder einer Pfanne etc. und das Produkt dann trotzdem ball bzw. kugelförmig aussieht.

Anhand der Figur 5 zeigt wird das erfindungsgemäße Verfahren zum Erzeugen eines ballförmigen Lebensmittelprodukts 5 näher erläutert.

Zunächst wird beispielsweise über die in Figur 1 gezeigte Füllmaschine ein Lebensmittelstrang 4 erzeugt und auf das Förderband 6 aufgebracht und in Transportrichtung T bewegt. Der Lebensmittelstrang erreicht eine Position zwischen den geöffneten Formteilen 9a, 9b wie aus Schritt A hervorgeht.

Jetzt kann beispielsweise bei einem intermittierenden Betrieb das Förderband 6 kurz stoppen. Dabei sendet z.B. die Steuereinrichtung 18 der Füllmaschine 2 ein entsprechendes Steuersignal an das jeweilige Stellglied, das im Schritt B die Formteile 9a, 9b aus der in Figur 5 gezeigten Position A nach innen in den Lebensmittelstrang 4 in die Formposition F in verfährt. Dabei sind die seitlichen Außenbereiche bzw. hier die Schneidkanten 17a, b der Formteile 9a, 9b auf Anschlag, so dass der untere Bereich 14 das Lebensmittel vollumfänglich umschließt.

Die Steuereinrichtung 18 kann dann wie aus Schritt C hervorgeht ein entsprechendes Signal ausgeben und ein Stellglied ansteuern, derart, dass der Stempel 10 nach unten verfährt. Dabei kann er von der Innenkontur der beiden Formteile 9a, 9b geführt werden. Der Stempel kann entweder weg- oder kraftgesteuert verfahren werden, jedenfalls maximal bis zu einer Position, in der der Durchmesser zwischen den geschlossenen Formteilen 9a,9b noch nicht kleiner ist als der Durchmesser des Stempels. Schritt C zeigt jetzt alle Komponenten 9a,9b, 10 der Formeinrichtung 3 in der Formposition F. Der Stempel 10 drückt dabei auf das von den Formteilen und dem Förderband umschlossenen Lebensmittel. Die gewölbten Aussparungen 11, 12a, 12b des Stempels 10 und der Formteile 9a, 9b grenzen dabei derart aneinander an, dass auf dem Förderband 6 ein geschlossener, ballförmiger Formraum 13 entsteht.

Die Formposition in Schritt C wird dabei 300ms bis 1 000ms Sekunden gehalten, damit ein stabiler Verbund des Lebensmittels erzeugt werden kann und das Produkt im Anschluss nicht zerfällt.

Anschließend werden wie aus Schritt D hervorgeht die Stellglieder für die Formteile 9a, 9b und den Stempel 10 beispielsweise durch die Steuerung 18 angesteuert, so dass sich die Formteile 9a, 9b wieder nach außen auseinanderbewegen und der Stempel sich nach oben bewegt, um so das ballförmige Lebensmittelprodukt 5 freizugeben. Das erzeugte ballförmige Lebensmittelprodukt 5 kann dann auf dem Förderband 6 weitertransportiert werden oder abgenommen werden und wie aus Figur 2 hervorgeht, können beispielsweise mehrere ballförmige Lebensmittelprodukte 5 in einer Schale verpackt werden.

Nach Schritt D wird das Transportband 6 beispielsweise um einen Abschnitt weiterbewegt, damit im angrenzenden Lebensmittelstrang das nächste Lebensmittelprodukt 5 geformt werden kann. Wenn auch nicht dargestellt ist es möglich, dass sich bei einem kontinuierlichen Betrieb die Formeinrichtung 3 beim Formen im geschlossenen Zustand zusammen mit dem Förderband 6 in Transportrichtung T bewegt. Es ist auch möglich, dass die Formeinrichtung 3 mehrere in Transportrichtung T hintereinander angeordnete Formteile 9a, 9b aufweist, die über die Kanten 17a, 17b aneinander angrenzen, um gleichzeitig mehrere ballförmige Lebensmittelprodukte im Lebensmittelstrang 4 auszubilden.

Gemäß einer bevorzugten Ausführungsform ist das Lebensmittelprodukt Hackfleisch, das über einen Fleischwolf 7, wie in den Figuren 1 und 7 dargestellt ist, erzeugt wird, und dass insbesondere aus einer Vielzahl von Einzelsträngen gebildet ist. Dieses Hackfleisch wird als Produktstrang 4 auf das Förderband 6 produziert. Mit dem zuvor genannten erfindungsgemäßen Verfahren unter Zuhilfenahme der zuvor erläuterten Vorrichtung kann ein ballförmiges Burger Patty erzeugt werden, dass noch die entsprechenden Strukturen des erzeugten Hackfleisches aufweist, das heißt, bei dem die Einzelstränge im Produkt erkennbar bleiben, wie in Figur 6, linke Abbildung, gezeigt ist. Zusammenfassend kann festgehalten werden, dass durch die aneinander angrenzenden gewölbten Aussparungen von den Formteilen und vom Stempel sowie das daran angrenzende Förderband ein ballförmiges Lebensmittelprodukt auf einfache Art und Weise gefertigt werden kann.

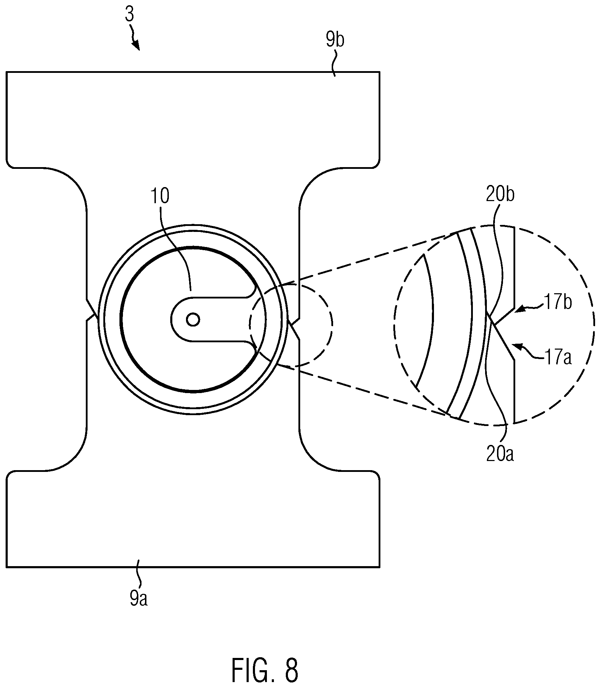

Gemäß einer bevorzugten Ausführungsform weisen die gegenüberliegenden Formteile 9a,9b, jeweilige Schneidkanten 17a, 17b auf, deren Schneidflächen 20a, 20b , wenn die Formteile in der Formposition F angeordnet sind, überlappen, wie aus der vergrößerten Darstellung in Fig. 8 hervorgeht.. Das heißt, dass jedes Formteil 9a,9b in Transportrichtung betrachtet, eine vordere Schneidkante und eine hintere Schneidkante 17a, 17b aufweist, zwischen denen die Aussparung 12a, 12b angeordnet ist.

Wenn sich die Schneidflächen der gegenüber liegenden Schneidkanten 17 a und 17b der gegenüberliegenden Formteile aufeinander zu bewegt werden bis sie sich überlappend berühren, kann der Formraum seitlich geschlossen werden und neben dem Formen kann gleichzeitig ein Abscheren des ballförmigen Lebensmittelprodukts vom Lebensmittelstrang erfolgen.

## Patentansprüche

1. Vorrichtung (1) zum Erzeugen eines ballförmigen Lebensmittelprodukts (5), insbesondere Burger Patties mit:
- einem Förderband (6) zum Fördern eines Lebensmittelstrangs (4), insbesondere Hackfleischstrangs in Transportrichtung (T) und mit
- einer Formeinrichtung (3) zum Formen des ballförmigen Lebensmittelprodukts (5), die gegenüberliegende Formteile (9a, 9b) aufweist, die auf dem Förderband (6) quer zur Transportrichtung (T) aufeinander zu in eine Formposition (F) und auseinander bewegbar sind und
einen auf und ab bewegbaren Stempel (10), der in einer Formposition (F) zwischen die Formteile (9a, 7b) bewegbar ist,
wobei die Unterseite (16) des Stempels (10) und die zur Förderbandmitte gerichteten Seiten der Formteile (9a, 9b) jeweils nach innen gerichtete gewölbte Aussparungen (11, 12a, 12b) aufweisen.

2. Vorrichtung (1) nach Anspruch 1 **dadurch gekennzeichnet, dass** die gewölbten Aussparungen (11, 12a, 12b) des Stempels (10) und der Formteile (9a,9b) in der Formposition (F) derart aneinander angrenzen, dass auf dem Förderband (6) ein geschlossener ballförmiger Formraum (13) entsteht.

3. Vorrichtung (1) nach Anspruch 1 oder 2, **dadurch gekennzeichnet, dass** die Aussparung (12a,12b) im jeweiligen Formteil (9a,9b) derart ausgebildet ist, dass im Querschnitt betrachtet, die Innenwand des jeweiligen Formteiles (9a, 9b) gekrümmt, insbesondere teilkreisförmig oder halbkreisförmig ist.

4. Vorrichtung (1) nach Anspruch 3, **dadurch gekennzeichnet, dass** im Querschnitt betrachtet die Querschnittsfläche der Aussparung (12a,12b) zumindest in einem unteren Bereich (14), insbesondere einer unteren Hälfte des jeweiligen Formteils zumindest abschnittsweise nach unten abnimmt.

5. Vorrichtung (1) nach mindestens einem der Ansprüche 1-4, **dadurch gekennzeichnet, dass** zumindest in einem unteren Bereich (14), insbesondere der unteren Hälfte des jeweiligen Formteils (9a,9b) die Innenfläche im Querschnitt betrachtet, gekrümmt ist und gleichzeitig im Längsschnitt quer zur Transportrichtung (T) betrachtet gekrümmt ist.

6. Vorrichtung (1) nach mindestens einem der Ansprüche 1-5, **dadurch gekennzeichnet, dass** im Querschnitt betrachtet die Aussparung (11) im Stempel (10) im Wesentlichen kreisförmig ist.

7. Vorrichtung (1) nach mindestens einem der Ansprüche 1-6, **dadurch gekennzeichnet, dass** die Querschnittsfläche der Aussparung (11) im Stempel (10) zur Unterseite (16) hin zunimmt.

8. Vorrichtung (1) nach mindestens einem der Ansprüche 1-7, **dadurch gekennzeichnet, dass**, wenn die Formteile in der Formposition (F) angeordnet sind, gegenüberliegende Seitenbereiche (17a,17b) der gegenüberliegenden Formteile sich berühren oder vorzugsweise
die gegenüberliegenden Formteile jeweilige Schneidkanten (17a, 17b) aufweisen, deren Schneidflächen (20a,20b) sich, wenn die Formteile in der Formposition (F) angeordnet sind, überlappen.

9. Vorrichtung (1) nach Anspruch 8, **dadurch gekennzeichnet, dass** der Abstand der Innenflächen der gegenüberliegenden Formteile in einer Richtung quer zur Transportrichtung und in Transportrichtung betrachtet, in einem unteren Bereich, insbesondere der unteren Hälfte nach unten hin abnimmt und vorzugsweise in einem oberen Bereich der Formteile, insbesondere in einer oberen Hälfte der Formteile im Wesentlichen konstant ist.

10. Vorrichtung (1) nach Anspruch 8 oder 9, **dadurch gekennzeichnet, dass** der Stempel (10) im oberen Bereich (15) der Formteile (9a,9b) über die Innenflächen der Formteile (9a,9b) geführt werden kann, wobei vorzugsweise die Außenkontur des Stempels (10) im Wesentlichen komplementär zur Innenkontur der gegenüberliegenden Formteile ausgebildet ist, wenn sich diese in der Formposition befinden.

11. Verfahren zum Erzeugen eines ballförmigen Lebensmittelprodukts, insbesondere mit einer Vorrichtung (1) nach mindestens einem der Ansprüche 1-10, mit folgenden Schritten:
- Erzeugen eines Lebensmittelstrangs (4) und Aufbringen des Lebensmittelrangs (4) auf das Förderband (6),
- Transportieren des Lebensmittelstrangs (4) auf dem Förderband (6) zwischen die voneinander beabstandeten Formteile (9a,9b),
- Schließen der Formeinrichtung (3) durch aufeinander zu bewegen der Formteile in die Formposition (F) , wodurch das Lebensmittel verdrängt wird und Bewegen des Stempels (10) von oben auf das Lebensmittel, wodurch das Lebensmittel durch die Formteile (9a,9b), den Stempel (10) und das Förderband (6) in eine ballförmige Form gepresst wird, und
- Öffnen der Formeinrichtung (1).

12. Verfahren Nach Anspruch 11, **dadurch gekennzeichnet, dass** vor dem Öffnen die Formeinrichtung (1) eine bestimmte Zeit, insbesondere 300ms bis 1000ms in der Formposition gehalten wird.

13. Verfahren nach Anspruch 11 oder 12, **dadurch gekennzeichnet, dass** das Lebensmittelprodukt Hackfleisch ist, wobei über einen Fleischwolf (7) Hackfleisch, das vorzugsweise aus einer Vielzahl von Einzelsträngen gebildet ist, auf das Förderband (6) produziert wird und durch die Formeinrichtung (1) ballförmige Burger Pattys erzeugt werden.

14. Füllmaschine (2), mit einer Vorrichtung nach mindestens einem der Ansprüche 1-10 und mit einem Förderwerk, das über eine Auslasseinrichtung das Lebensmittel auf das Förderband (6) produziert.

15. Füllmaschine (2) nach Anspruch 14, **dadurch gekennzeichnet, dass** die Auslasseinrichtung einen Fleischwolf (7) aufweist.
